# EUROPÄISCHE PATENTSCHRIFT

(11) **EP 0 619 346 B1**
(45) Veröffentlichungstag und Bekanntmachung des Hinweises auf die Patenterteilung: **24.06.1998**
(21) Anmeldenummer: 94104860.5
(22) Anmeldetag: 28.03.1994
(51) Int. Cl.: C09B 69/06, C09D 11/02, C09D 11/00, D06P 1/90

(54) **Verlackte tris- oder tetrakationische Polymethinfarbstoffe**
Lacquered tris-or tetracationic polymethin dyes
Colorants polyméthiniques tris-ou tétracationiques laqués

(30) Priorität: 08.04.1993 DE 4311723; 11.08.1993 DE 4326889
(43) Veröffentlichungstag der Anmeldung: 12.10.1994
(73) Patentinhaber: BASF Aktiengesellschaft, 67063 Ludwigshafen (DE)
(72) Erfinder: Closs, Friedrich, Dr., D-68165 Mannheim (DE); Albert, Bernhard, Dr., D-67133 Maxdorf (DE); Wienand, Henning, Dr., D-68809 Neulussheim (DE)

(56) Entgegenhaltungen:
- EP-A- 0 464 543
- US-A- 2 140 248

## Beschreibung

Die vorliegende Erfindung betrifft neue verlackte tris- oder tetrakationische Polymethinfarbstoffe der allgemeinen Formel I 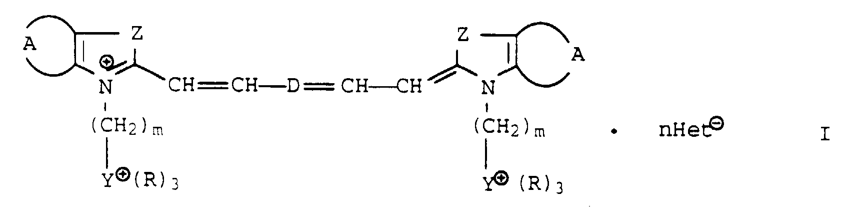 in der die Variablen folgende Bedeutung haben:
- A: den Rest eines an den Heterocyclus anellierten Benzol- oder Naphthalinkerns, der bis zu drei der folgenden Substituenten tragen kann: C₁-C₁₂-Alkylgruppen, deren C-Kette durch Sauerstoffatome in Etherfunktion unterbrochen sein kann, C₁-C₁₂-Alkoxy, Phenyl, Phenoxy, Phenylthio, Cyano, Amino, Mono-(C₁-C₁₂-alkyl)amino, Di-(C₁-C₁₂-alkyl)amino, Hydroxy oder Halogen;
- Y: Stickstoff oder Phosphor;
- R: gleiche oder verschiedene der folgenden Reste:
C₁-C₁₈-Alkylgruppen, deren C-Kette durch Sauerstoffatome in Etherfunktion unterbrochen sein kann und die bis zu drei der folgenden Substituenten tragen können: Carboxy, C₁-C₄-Alkanoyl, C₁-C₄-Alkoxycarbonyl, C₁-C₄-Alkanoylamino, C₁-C₄-Alkoxycarbonylamino, Acryloyloxy, Methacryloyloxy, Phenyl, Amino, Cyano, Hydroxy oder Halogen; Phenyl- oder C₅-C₇-Cycloalkylgruppen, die jeweils bis zu drei der folgenden Substituenten tragen können: C₁-C₄-Alkyl, C₁-C₄-Alkoxy oder Halogen;
- Z: -NR¹-; -O-; -S-; -C(CH₃)₂- oder -CH=CH-,
wobei R¹ einen der definitionsgemäßen Alkyl-, Phenyl- oder C₅-C₇-Cycloalkylreste R bedeutet;
- D: -CX¹=; -CH=CX¹-CH=; 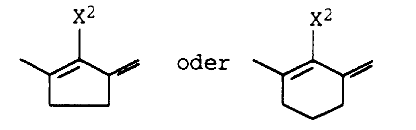 wobei die Variablen folgende Bedeutung haben:
- X¹: Wasserstoff, Chlor, Brom oder C₁-C₆-Alkyl;
- X²: Chlor, Cyano, C₁-C₁₂-Alkoxy oder C₁-C₁₂-Alkylthio; Aryloxy oder Arylthio, die jeweils bis zu fünf der folgenden Substituenten tragen können: Amino, Halogen, Nitro, Cyano, Isocyanato, Isothiocyanato, Hydroxy, Carboxy, Acryloyloxy, Methacryloyloxy, C₁-C₁₂-Alkyl, C₂-C₁₂-Alkenyl, C₁-C₁₂-Alkoxy, C₁-C₁₂-Alkanoyl, C₁-C₁₂-Alkanoyloxy, C₁-C₁₂-Alkorycarbonyl, C₁-C₁₂-Alkoxycarbonyloxy, Mono-(C₁-C₁₂-alkyl)amino und/oder Di-(C₁-C₁₂-alkyl)amino, wobei die C-Kette der Alkylreste durch Sauerstoffatome in Etherfunktion unterbrochen sein kann und die Alkylreste der Aminogruppen durch Hydroxy substituiert sein können;
eine Aminogruppe 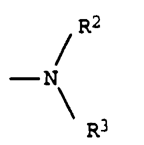 oder Ammoniogruppe 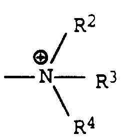 wobei R², R³ und R⁴ unabhängig voneinander C₁-C₁₂-Alkyl, deren C-Kette durch Sauerstoffatome in Etherfunktion unterbrochen sein kann, oder Aryl bedeuten, einer der Reste jeweils auch Wasserstoff bedeuten kann und R² und R³ auch unter Ausbildung eines das Stickstoffatom sowie gegebenenfalls weitere Heteroatome enthaltenden, 5- oder 6-gliedrigen Rings miteinander verbunden sein können;
Het ^{⊖} Äquivalent eines Heteropolysäureanions;
- m: 1 bis 10;
- n: 3 oder 4.

Außerdem betrifft die Erfindung die Verwendung dieser verlackten Polymethinfarbstoffe zur Pigmentierung von Lacken, Druckfarben, Tinten und Kunststoffen sowie Druckfarben und Tinten, welche diese Pigmente enthalten.

Mit Hilfe moderner Geräte der Kommunikationstechnik gewinnt das sichere und schnelle Erfassen von Informationen eine immer stärkere Bedeutung. Dabei kommt dem automatischen, digitalen Einlesen von gedruckt, digital oder analog vorliegender Information eine besondere Rolle zu. Als Beispiel seien gedruckte Barcodes genannt, die mit geeigneten Lichtquellen und Detektoren abgetastet und gelesen werden können.

In diesem Zusammenhang sind im Infrarotbereich absorbierende Farbmittel, die im sichtbaren Bereich schwache bzw. keine Absorption zeigen, von besonderem Interesse. Weitere Einsatzmöglichkeiten für diese Farbmittel sind neben dem Verpackungsdruck allgemein insbesondere der Wertpapierdruck. Darunter wird derjenige Sektor verstanden, der Wertpapiere, Aktien, Securitydrucke aller Art und darüber hinaus Identifikationskarten, Bahn- und Flugtickets, Lotterielose, Sicherheitsmerkmale auf Etiketten und Berechtigungsscheine aller Art umfaßt.

Die für diese Zwecke eingesetzten Farbmittel müssen je nach Anwendung eine Reihe von unterschiedlichen Anforderungen erfüllen. In der Regel sind hohe Lichtechtheit sowie schmalbandige IR-Absorption und gute Transparenz im sichtbaren Bereich essentiell.

Im Infrarotbereich absorbierende Farbmittel sind z.B. Polymethinfarbstoffe. Ihre Lichtechtheit ist jedoch in der Regel nicht ausreichend für die genannten Anwendungszwecke. Es ist zwar bekannt, daß die Lichtechtheit von Polymethinen durch Verlackung mit Heteropolysäuren erhöht werden kann (US-A-2 140 248), jedoch werden bei der Verlackung von im IR-Bereich absorbierenden Polymethinen nur äußerst farbschwache Pigmentpulver mit keiner oder nur sehr geringer Absorption im Infrarotbereich erhalten.

Der Erfindung lag daher die Aufgabe zugrunde, Farbmittel bereitzustellen, die den genannten Anforderungen gerecht werden und sich insgesamt durch gute Anwendungseigenschaften auszeichnen.

Demgemäß wurden die eingangs definierten verlackten tris- oder tetrakationischen Polymethinfarbstoffe I gefunden.

Außerdem wurde ihre Verwendung zur Pigmentierung von Lacken, Druckfarben, Tinten und Kunststoffen gefunden.

Weiterhin wurden Druckfarben und Tinten gefunden, welche die Verbindungen I enthalten.

Bevorzugte Ausgestaltungen der Erfindung sind den Unteransprüchen zu entnehmen.

Die Gruppierung A entspricht dem Rest eines anellierten Naphthalinkerns und vorzugsweise dem eines anellierten Benzolkerns, wobei jeweils die unsubstituierten Reste und die durch ein Chloratom substituierten Reste bevorzugt sind.

Handelt es sich um einen substituierten Rest A, so kommen als Substituenten in Betracht:
- C₁-C₁₂-Alkylgruppen wie Heptyl, Octyl, 2-Ethylhexyl, Nonyl, Decyl, Undecyl, Dodecyl sowie verzweigte Reste dieser Art und vor allem C₁-C₆-Alkylgruppen wie Methyl, Ethyl, Propyl, Isopropyl, Butyl, Isobutyl, sec.-Butyl, tert.-Butyl, Pentyl, Isopentyl, Neopentyl, tert.-Pentyl, Hexyl und 2-Methylpentyl;
- C₁-C₁₂-Alkylgruppen, deren C-Kette durch Sauerstoffatome in Etherfunktion unterbrochen ist, wie 2-Methoxy-, 2-Ethoxy-, 2-Propoxy-, 2-Isopropoxy- und 2-Butoxyethyl, 2- und 3-Methoxypropyl, 2- und 3-Ethoxypropyl, 2- und 4-Ethoxybutyl, 2-und 4-Isopropoxybutyl, 5-Ethoxypentyl, 6-Methoxyhexyl, 4-Oxa-6-ethyldecyl, 3,6-Dioxaheptyl, 3,6-Dioxaoctyl, 3,6-Dioxadecyl, 3,6,9-Trioxadecyl und 3,6,9-Trioxaundecyl;
- C₁-C₁₂-Alkoxygruppen wie Heptyloxy, Octyloxy, 2-Ethylhexyloxy, Nonyloxy, Decyloxy, Undecyloxy, Dodecyloxy und vor allem C₁-C₆-Alkoxygruppen wie Methoxy, Ethoxy, Propoxy, Isopropoxy, Butoxy, Isobutoxy, sec.-Butoxy, Pentyloxy, Isopentyloxy, Neopentyloxy und Hexyloxy;
- Mono- und Di-(C₁-C₁₂-alkyl)aminogruppen wie Pentyl-, Hexyl-, Heptyl- und 2-Ethylhexylamino sowie Dipentyl- und Dihexylamino und vor allem Mono- und Di-(C₁-C₄-alkyl)aminogruppen wie Methyl-, Ethyl-, Propyl-, Isopropyl- und Butylamino sowie Dimethyl-, Methylethyl-, Diethyl- und Diisopropylamino;
- Phenoxy, Phenylthio und vor allem Phenyl;
- Cyano, Hydroxy, Amino, Halogen wie Fluor, vor allem Brom und insbesondere Chlor.

Y bedeutet Phosphor und vorzugsweise Stickstoff.

Die Reste R können gleich oder verschieden sein, bevorzugt sind die Reste R jedoch gleich.

Handelt es sich bei den Resten R um C₁-C₁₈-Alkylgruppen, so sind die oben als Substituenten der Gruppierung A aufgeführten C₁-C₁₂-Alkylgruppen und -Oxaalkylgruppen bevorzugt, wobei solche mit bis zu 4 C-Atomen besonders bevorzugt, Methyl und Ethyl ganz besonders bevorzugt sind.

Weiterhin eignen sich als Reste R beispielsweise die folgenden Alkylgruppen: Tridecyl, Tetradecyl, Pentadecyl, Hexadecyl, Heptadecyl, Octadecyl, Nonadecyl, Eicosyl, Heneicosyl und Docosyl sowie verzweigte Reste dieser Art.

Wird die C-Kette der Alkylgruppen durch Sauerstoffatome in Etherfunktion unterbrochen, so erhöht sich die Zahl der Kettenglieder um die Anzahl dieser Sauerstoffatome. C₁-C₆-Alkylgruppen enthalten dabei bevorzugt ein oder zwei, C₇-C₁₂-Alkylgruppen bis zu drei und C₁₃-C₂₂-Alkylgruppen bis zu fünf Sauerstoffatome in der Kette. Beispiele für diese Gruppierungen sind die bereits als Substituenten an A genannten Reste.

Die Alkylgruppen R können bis zu drei, vorzugsweise bis zu zwei Substituenten tragen. Als Beispiele für substituierte Alkylgruppen seien die folgenden Reste genannt:
- bevorzugt Carboxyalkyl wie vor allem Carboxymethyl und 2-Carboxyethyl sowie daneben 3-Carboxypropyl, 4-Carboxybutyl und 5-Carboxypentyl;
- C₁-C₄-Alkanoylalkyl wie Propan-2-on-1-yl, Butan-3-on-1-yl, Butan-3-on-2-yl und 2-Ethylpentan-3-on-l-yl;
- bevorzugt C₁-C₄-Alkoxycarbonylalkyl wie vor allem Ethoxycarbonylmethyl, 2-(Ethoxycarbonyl)ethyl und 2-(octyloxycarbonyl)ethyl sowie daneben 2- und 3-(Methoxycarbonyl)propyl und 3-(Isopropoxycarbonyl)propyl;
- C₁-C₄-Alkanoylaminoalkyl wie Acetylaminomethyl, 2-(Acetylamino)ethyl, 2-(Propionylamino)ethyl)ethyl und 2-(Butyrylamino)ethyl;
- C₁-C₄-Alkoxycarbonylaminoalkyl wie Ethoxycarbonylaminomethyl und 2-(Ethoxycarbonylamino)ethyl;
- besonders Acryloyloxyalkyl und Methacryloyloxyalkyl wie 2-Acryloyloxyethyl, 2-Methacryloyloxyethyl, 2- und 3-Methacryloyloxypropyl, 2- und 4-Methacryloyloxybutyl;
- Phenylalkyl wie Benzyl und 1- und 2-Phenylethyl;
- bevorzugt Hydroxyalkyl wie vor allem 2-Hydroxyethyl sowie daneben 2- und 3-Hydroxypropyl, 2- und 4-Hydroxybutyl, 5-Hydroxypentyl, 6-Hydroxyhexyl, auch 7-Hydroxyheptyl und 8-Hydroxyoctyl;
- Halogenalkyl wie Fluor-, Difluor- und Trifluormethyl, 2-Fluor-, 1,1-Difluor- und 1,1,1-Trifluorethyl, Heptafluorpropyl, 5-Fluorpentyl, besonders Chlor- und Trichlormethyl, 2-Chlorethyl, 4-Chlorbutyl, 6-Chlorhexyl und vor allem Brommethyl, 2-Bromethyl und 4-Brombutyl;
- Cyanoalkyl wie Cyanomethyl, 2-Cyanoethyl, 3-Cyanopropyl, 4-Cyanobutyl, 5-Cyanopentyl und 6-Cyanohexyl;
- Aminoalkyl wie 2-Aminoethyl, 2- und 3-Aminopropyl, 2- und 4-Aminobutyl, 5-Aminopentyl und 6-Aminohexyl.

Als Reste R kommen weiterhin Cyclopentyl, Cyclohexyl und Cycloheptyl sowie besonders Phenyl in Betracht, die vorzugsweise unsubstituiert sind, aber auch bis zu drei Substituenten wie die bereits genannten C₁-C₄-Alkyl- und C₁-C₄-Alkoxygruppen und Halogen wie Fluor, bevorzugt Chlor und Brom tragen können. Beispiele für substituierte Reste dieser Gruppe sind 4-Methyl-, 4-Methoxy-, 4-Chlor- und 4-Bromphenyl und 3-Methylcyclopentyl, 4-Methyl-, 4-Ethyl- und 2,3-Dichlorcyclohexyl.

Die Variable m bedeutet in der Regel 1 bis 10, bevorzugt 3 bis 6.

Beispiele für geeignete Gruppierungen -(CH₂)ₘ-Y^{⊕}(R)₃ sind (dabei bedeutet Ph=Phenyl, Me=Methyl, Et=Ethyl und Bu=Butyl):
-(CH₂)₄-N^{⊕}Et₃, -(CH₂)₃-N^{⊕}Me₃, -(CH₂)₃-N^{⊕}Bu₃, -(CH₂)₃-N^{⊕}Ph₃,
-(CH₂)₃-P^{⊕}Me₃, -(CH₂)₃-N^{⊕}Et₃, -(CH₂)₆-N^{⊕}Et₃, -(CH₂)₁₀-N^{⊕}Et₃,
-(CH₂)₃-P^{⊕}Et₃ und -(CH₂)₃-P^{⊕}Ph₃.

Als Gruppierung Z eignen sich neben -NR¹- und -O- besonders -S-, -C(CH₃)₂- und -CH=CH. Beispiele für R¹ sind die oben aufgeführten Reste R, wobei die gleichen Bevorzugungen gelten.

Geeignete Gruppen D sind
-CX¹=; -CH=CX¹-CH=; 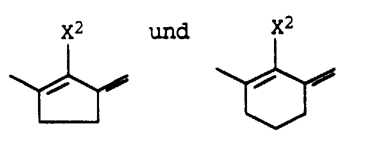 wobei X¹ Wasserstoff, Chlor, Brom oder einen der oben aufgeführten C₁-C₆-Alkylreste und X² Chlor, Cyano, einen der oben genannten C₁-C₁₂-, bevorzugt C₁-C₆-Alkoxyreste oder einen analogen C₁-C₁₂-Alkylthiorest, einen Aryloxyrest oder Arylthiorest oder eine Amino- oder Ammoniogruppe bedeutet.

Bevorzugte Gruppen D sind -CH=CH-CH= und 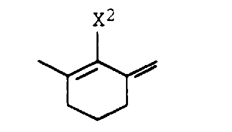 wobei X² Chlor oder insbesondere Aryloxy oder Arylthio bedeutet.

Von denen Aryloxy- und Arylthioresten X² sind α- und β-Naphthyloxy und -Naphthylthio sowie Phenoxy und Phenylthio als besonders geeignete Beispiele zu nennen.

Die Arylreste können dabei bis zu fünf, vorzugsweise bis zu zwei Substituenten tragen.

Als Substituenten kommen in Betracht:
- Amino, Halogen wie Chlor und Brom, Nitro, Cyano, Isocyanato, Isothiocyanato, Hydroxy, Carboxy, Acryloyloxy und Methacryloyloxy;
- C₁-C₁₂-, insbesondere C₁-C₆-Alkylgruppen, deren C-Kette durch Sauerstoffatome in Etherfunktion unterbrochen sein kann; Beispiele sind bei den Substituenten für Ring A aufgeführt;
- C₂-C₁₂-, insbesondere C₂-_{C6}-Alkenylgruppen wie 1- und 2-Propenyl, 1-, 2- und 3-Butenyl, 1,3-Butadienyl, 1-, 2-, 3- und 4-Pentenyl, 1,3-, 1,4- und 2,4-Pentadienyl und besonders Vinyl;
- C₁-C₁₂-, insbesondere C₁-C₆-Alkoxygruppen, deren C-Kette zusätzlich durch Sauerstoffatome in Etherfunktion unterbrochen sein kann; Beispiele sind die oben genannten Gruppen sowie 2-Methoxyethoxy, 2-Ethoxyethoxy, 2-Propoxyethoxy, 2-Isopropoxyethoxy, 2-Butoxyethoxy, 2- und 3-Methoxypropoxy, 2- und 3-Ethoxypropoxy, 2- und 3-Propoxypropoxy, 2- und 3-Butoxypropoxy, 2- und 4-Methoxybutoxy, 2- und 4-Ethoxybutoxy, 2-und 4-Propoxybutoxy, 2- und 4-Butoxybutoxy, 3,6-Dioxaheptyloxy, 3,6-Dioxaoctyloxy, 4,8-Dioxanonyloxy, 3,7-Dioxaoctyloxy, 3,7-Dioxanonyloxy, 4,7-Dioxaoctyloxy, 4,7-Dioxanonyloxy, 4,8-Dioxadecyloxy, 3,6,9-Trioxadecyloxy und 3,6,9-Trioxaundecyloxy;
- C₁-C₁₂-, insbesondere C₁-C₆-Alkanoylgruppen wie Formyl, Acetyl, Propionyl und Butyryl;
- C₁-C₁₂-, insbesondere C₁-C₆-Alkanoyloxygruppen wie Formyloxy, Acetyloxy, Propionyloxy und Butyryloxy;
- C₁-C₁₂-, insbesondere C₁-C₆-Alkoxycarbonylgruppen wie Methoxycarbonyl, Ethoxycarbonyl, Propoxycarbonyl und Butoxycarbonyl;
- C₁-C₁₂-, insbesondere C₁-C₆-Alkoxycarbonyloxygruppen wie Methoxycarbonyloxy, Ethoxycarbonyloxy, Propoxycarbonyloxy und Butoxycarbonyloxy;
- Mono- und Di-(C₁-C₁₂)-, insbesondere -(C₁-C₆)alkylaminogruppen, deren C-Kette durch Sauerstoffatome in Etherfunktion unterbrochen sein kann und die durch Hydroxy substituiert sein können; Beispiele sind die oben aufgeführten Gruppen sowie Mono- und Di-(2-hydroxyethyl)amino und Mono- und Di-(Hydroxyethyloxyethyl)amino.

Bevorzugte Substituenten sind z.B. Amino, Nitro, Chlor, Isothiocyanato, Hydroxy, Carboxy und Vinyl.

Beispiele für besonders bevorzugte Aryloxy- und Arylthiogruppen X sind Phenoxy, 2-, 3- und/oder 4-Amino-, -Nitro-, -Carboxy-, -Hydroxy- und -Chlorphenoxy und 4-Vinylphenoxy sowie Phenylthio, 4-Amino- und -Isothiocyanatophenylthio und 2,4-Dichlorphenylthio sowie α- und β-Naphthylthio.

Weiterhin kann X auch eine Aminogruppe 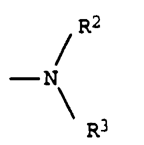 oder Ammoniogruppe 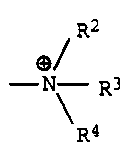 bedeuten.

Geeignete Reste R², R³ oder R⁴ sind die oben genannten C₁-C₁₂-, vor allem C₁-C₆-Alkylgruppen, deren C-Kette ebenfalls durch Sauerstoffatome in Etherfunktion unterbrochen sein kann. Außerdem können R², R³ oder R⁴ auch für Aryl, insbesondere Phenyl, stehen.

Die Reste R² und R³ bzw. R², R³ und R⁴ können gleich oder verschieden sein, wobei einer der Reste jeweils auch Wasserstoff bedeuten kann.

Schließlich können die Reste R² und R³ zusammen mit dem Stickstoffatom einen gesättigten oder ungesättigten, gegebenenfalls weitere Heteroatome enthaltenden, 5- oder 6-gliedrigen Ring bilden. Als Beispiele für diese Reste X seien Pyrryl, Pyrrolidyl, Pyrazyl, Imidazyl, Pyrazolinyl, Triazyl, Piperidyl, Piperazyl und Morpholinyl genannt.

Als Heteropolysäureanionen sind insbesondere solche auf der Basis von Molybdän, Wolfram und/oder Vanadin geeignet. Bevorzugte Beispiele sind dabei: Molybdato-, Vanadato- und Wolframatophosphat und Molybdato-, Vanadato- und Wolframatosilicat sowie Mischanionen dieser Art.

Bei einem dreifach geladenen Heteropolysäureanion ergibt sich für einen verlackten triskationischen Polymethinfarbstoff ein Kation/Anion-Verhältnis von 1:1, bei einem vierfach geladenen Anion entsprechend ein Molverhältnis von 1,33:1. Die entsprechenden Kation/Anion-Verhältnisse betragen bei einem verlackten tetrakationischen Polymethinfarbstoff (X entspricht hier einer Ammoniogruppe) 1:1,33 bzw. 1:1.

Bekanntermaßen kann die Herstellung dieser Heteropolysäuren bzw. ihrer Salze durch Ansäuern von Lösungen der Alkali- oder Ammoniummolybdate, -vanadate und/oder -wolframate in Gegenwart von wasserlöslichen Phosphaten und/oder Silikaten erfolgen. Die Heteropolysäuren sind auch im Handel erhältlich (z.B. von Merck, Darmstadt und Fluka, Neu-Ulm).

Die nichtverlackten tris- bzw. tetrakationischen Polymethinfarbstoffe der Formel Ia 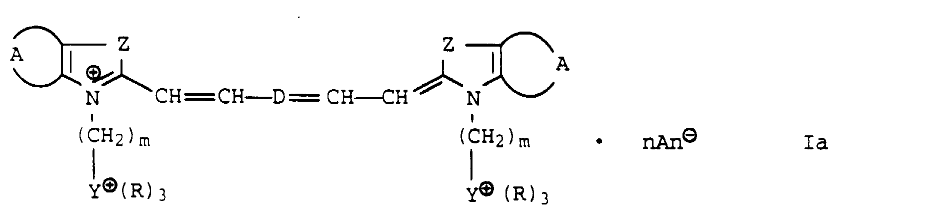 in der An^{⊖} vorzugsweise Halogenid, insbesondere Chlorid und vor allem Bromid, sowie Acetat bedeutet, können analog den Angaben in der DE-A-40 21 078 und der dort genannten Literatur (Houben-Weyl, 4- Aufl., Bd. V/1d, S. 268-273 (1972)) hergestellt werden.

Beispielsweise sei die Kondensation einer Verbindung der Formel II 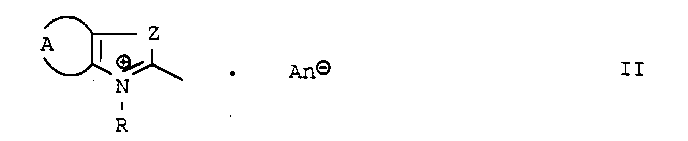 mit einer der Verbindungen der Formeln IIIa - IIIe 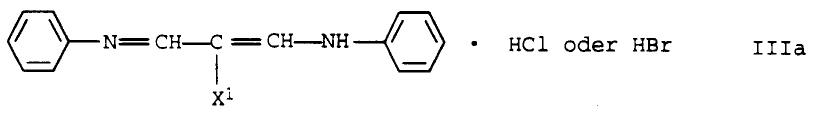 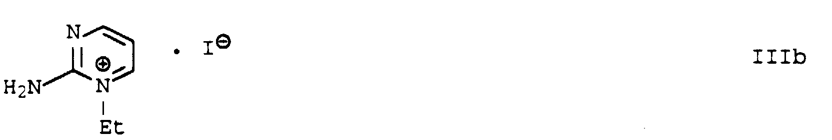 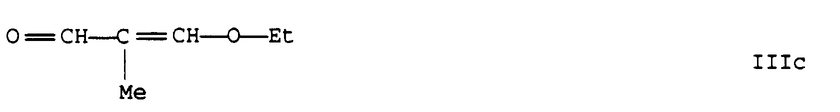 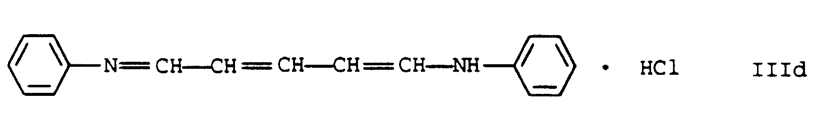 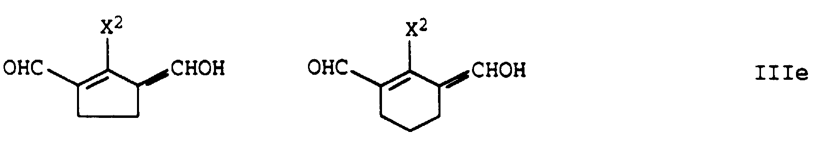 die den Rest D in Form folgender Gruppierungen enthalten: IIIa: -CX¹=; IIIb: -CH=; IIIc: -C(CH₃)=; IIId: -CH=CH-CH=;
IIIe: 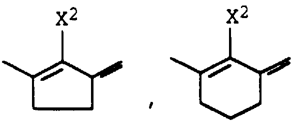 in einem Molverhältnis von etwa 2:1 genannt.

Die Polymethinfarbstoffe Ia, bei denen X² einen aromatischen oder stickstoffhaltigen Rest bedeutet, werden vorzugsweise aus entsprechenden Farbstoffen, bei denen X² Halogen, insbesondere Chlor bedeutet, durch nucleophilen Austausch des Halogenatoms durch die Gruppe X² in Gegenwart einer Base hergestellt. Diese Art der Umsetzung ist in Journal of Organic Chemistry 57, 4578-4580 (1992) für monokationische Polymethine beschrieben. Dieser Austausch kann in Wasser vorgenommen werden, so daß die Verlackung der Polymethinfarbstoffe Ia, d.h. ihre Überführung in Pigmentform, ohne Zwischenisolierung direkt in der anfallenden Reaktionslösung erfolgen kann.

Die Kondensation der Verbindungen II mit den Verbindungen III wird zweckmäßigerweise in einem Lösungsmittel wie Methanol, Propanol, Butanol und Eisessig, bevorzugt Acetanhydrid und Ethanol, oder in Gemischen der genannten Lösungsmittel, vorzugsweise unter Zusatz einer Base wie Triethylamin, Pyridin, Piperidin oder Natriumacetat als Katalysator bei Temperaturen von 40 bis 140°C, besonders 80 bis 120°C durchgeführt.

Die als Ausgangsstoffe für diese Synthese benötigten quartären Salze II können, wie beispielsweise aus J. Heterocyclic Chem. 22, 1727-34 (1985) bekannt, durch Reaktion einer Verbindung der Formel IV 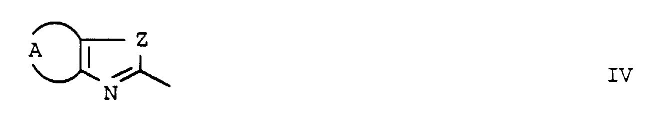 mit einer Verbindung der Formel V

Hal-(CH₂)ₘ-Y^{⊕} (R)₃ V,

in der Hal für Chlor oder Brom steht, hergestellt werden.

Die Verlackung der triskationischen Polymethinfarbstoffe, d.h. ihre Überführung in Pigmente, kann nach üblichen Methoden vorgenommen werden, beispielsweise indem man wäßrige Lösungen der Farbstoffe bei etwa 20 bis 100°C mit wäßrigen Lösungen von Salzen der Heteropolysäuren versetzt, den pH-Wert der Mischung durch Zugabe einer Säure wie Salzsäure oder Essigsäure in der Regel auf etwa 0 bis 5, bevorzugt 0 bis 2, einstellt und dann im allgemeinen 0,5 bis 5 h bei der gewählten Temperatur nachrührt. Die auf diese Weise ausgefällten Pigmente können anschließend durch Abfiltrieren, Waschen und Trocknen isoliert werden.

Die erfindungsgemäßen verlackten tris- oder tetrakationischen Polymethinfarbstoffe I zeichnen sich im Gegensatz zu verlackten mono- oder dikationischen Polymethinfarbstoffen überraschenderweise durch insgesamt günstige Anwendungseigenschaften aus: Sie weisen sowohl hohe Lichtechtheit als auch eine starke, schmalbandige Absorption im nahen Infrarotbereich bei Wellenlängen von etwa 700 bis 1000 nm und gleichzeitig gute Transparenz im sichtbaren Bereich auf. Außerdem fallen sie in der Regel amorph und sehr feinteilig an und lassen sich aufgrund ihrer Kornweichheit gut in Anwendungsmedien dispergieren.

Die erfindungsgemäßen Farblacke I eignen sich daher vorteilhaft für eine Vielzahl von Anwendungen wie die Pigmentierung von Kunststoffen und Lacken und insbesondere für die Herstellung von Druckfarben sowie Tinten, vor allem für Ink-Jet-Verfahren, wobei die Farblacke I z.B., wie in der DE-A-41 15 608 beschrieben, als wäßrige oder alkoholische Dispersionen eingesetzt werden können.

### Beispiele

### Herstellung von erfindungsgemäßen verlackten triskationischen Polymethinfarbstoffen I

Zunächst wurden nach den Angaben der DE-A-40 21 078 (Beispiele 15, 3 und 1) die nichtverlackten triskationischen Polymethinfarbstoffe Ia

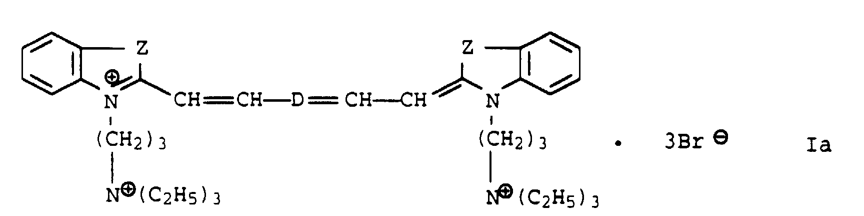

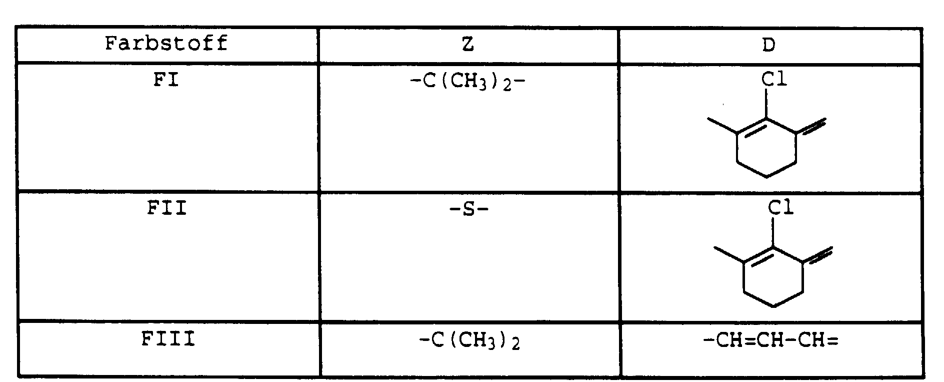

hergestellt.

Die Farbstoffe FI bis FIII wurden dann, wie im folgenden beschrieben, mit Lösungen von Heteropolysäuren zu den Farblacken I 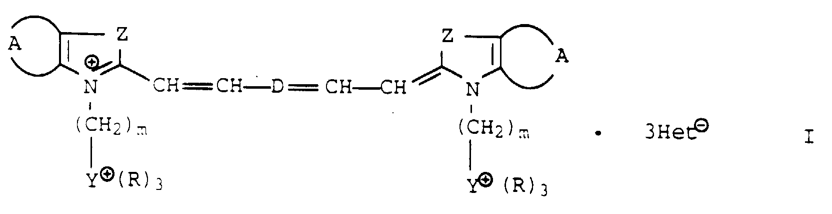 umgesetzt (Beispiele 1 bis 4).

Zur Bestimmung der Absorptionsmaxima wurden die Farblacke I in Toluol und einem üblichen Bindemittel dispergiert und auf eine transparente Folie aus Polyacetat aufgerakelt.

### Beispiel 1

Z: -C(CH₃)₂-; 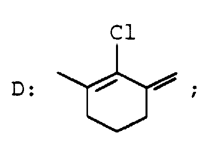 Het⁻: PMo₁₂O₄₀³⁻

Zu einer Lösung von 114 g des Farbstoffs FI in 1500 ml Wasser wurden bei 80°C 3 1 einer 0,04 molaren wäßrigen Lösung von Molybdatophosphorsäure (hergestellt aus 353 g Molybdäntrioxid, 33 g Dinatriumhydrogenphosphat und 5200 g Wasser und mit 18,6 gew.-%iger Salzsäure auf den pH-Wert 1,8 eingestellt) gegeben.

Nach dreistündigem Nachrühren bei 90°C und anschließender Abkühlung auf 70°C wurde der gebildete Niederschlag abfiltriert, mit Wasser gewaschen und bei 80°C getrocknet.

Es wurden 237 g dunkelgrünes Pigmentpulver erhalten:
λₘₐₓ = 815 nm.

### Beispiel 2

Z: -C(CH₃)₂-; 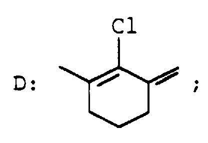 Het⁻: SiW₁₂O₄₀⁴⁻

Zu einer Lösung von 9,8 g des Farbstoffs FI in 200 ml Wasser wurde bei 70°C eine Lösung von 21,6 g Wolframatokieselsäure in 80 ml Wasser gegeben.

Nach einstündigem Nachrühren bei 90°C wurde analog Beispiel 1 aufgearbeitet.

Es wurden 24,5 g tiefgrünes Pigmentpulver erhalten:
λₘₐₓ = 780 nm.

### Beispiel 3

Z: -S-; 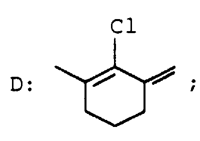 Het⁻: PMo₁₂O₄₀³⁻

Zu einer Lösung von 10 g des Farbstoffs FII in 100 ml Wasser wurde bei 70°C eine Lösung von 18,2 g Molybdatophosphorsäure in 20 ml Wasser gegeben.

Nach zweistündigem Nachrühren bei 70°C wurde der gebildete Niederschlag abfiltriert, gewaschen und getrocknet.

Es wurden 15 g blaugrünes Pigmentpulver erhalten:
λₘₐₓ = 850 nm.

### Beispiel 4

Z: -C(CH₃)₂-; D: -CH=CH-CH=; Het-: PMo₁₂O₄₀³⁻

Zu einer Lösung von 4,5 g des Farbstoffs FIII in 100 ml Wasser wurde bei 70°C eine Lösung von 9,7 g Molybdatophosphorsäure in 30 ml Wasser gegeben.

Nach zweistündigem Nachrühren bei 80°C und Abkühlen auf 50°C wurde der gebildete Niederschlag abfiltriert, gewaschen und getrocknet.

Es wurden 10 g dunkelgrünes Pigmentpulver erhalten:
λₘₐₓ = 780 nm.

### Beispiele 5 bis 9

Diese Polymethinfarbstoffe wurden durch nucleophilen Chloraustausch aus dem Farbstoff FI und anschließende Verlackung mit Molybdatophosphorsäure hergestellt.

Dazu wurden x g des Farbstoffs FI in y 1 Wasser gelöst. Dann wurde eine Lösung von a g der Verbindung X-H und b g Natriumhydroxid in c ml Wasser zugegeben. Die erhaltene Lösung wurde 15 min bei Raumtemperatur gerührt.

Die Verlackung erfolgte anschließend durch Zugabe von d 1 einer 0,04 molaren wäßrigen Lösung von Molybdatophosphorsäure (hergestellt aus 353 g Molybdäntrioxid, 33 g Dinatriumhydrogenphosphat und 5200 g Wasser und mit 18,6 gew.-%iger Salzsäure auf den pH-Wert 1,8 eingestellt) bei 70°C und anschließendes einstündiges Nachrühren bei dieser Temperatur.

Nach Abkühlung auf 50°C wurde der Niederschlag abfiltriert, mit Wasser gewaschen und bei 50°C getrocknet.

Die Bestimmung der Absorptionsmaxima erfolgte analog zu den Beispielen 1 bis 4.

Einzelheiten zu diesen Versuchen sowie deren Ergebnisse sind in der folgenden Tabelle aufgeführt.

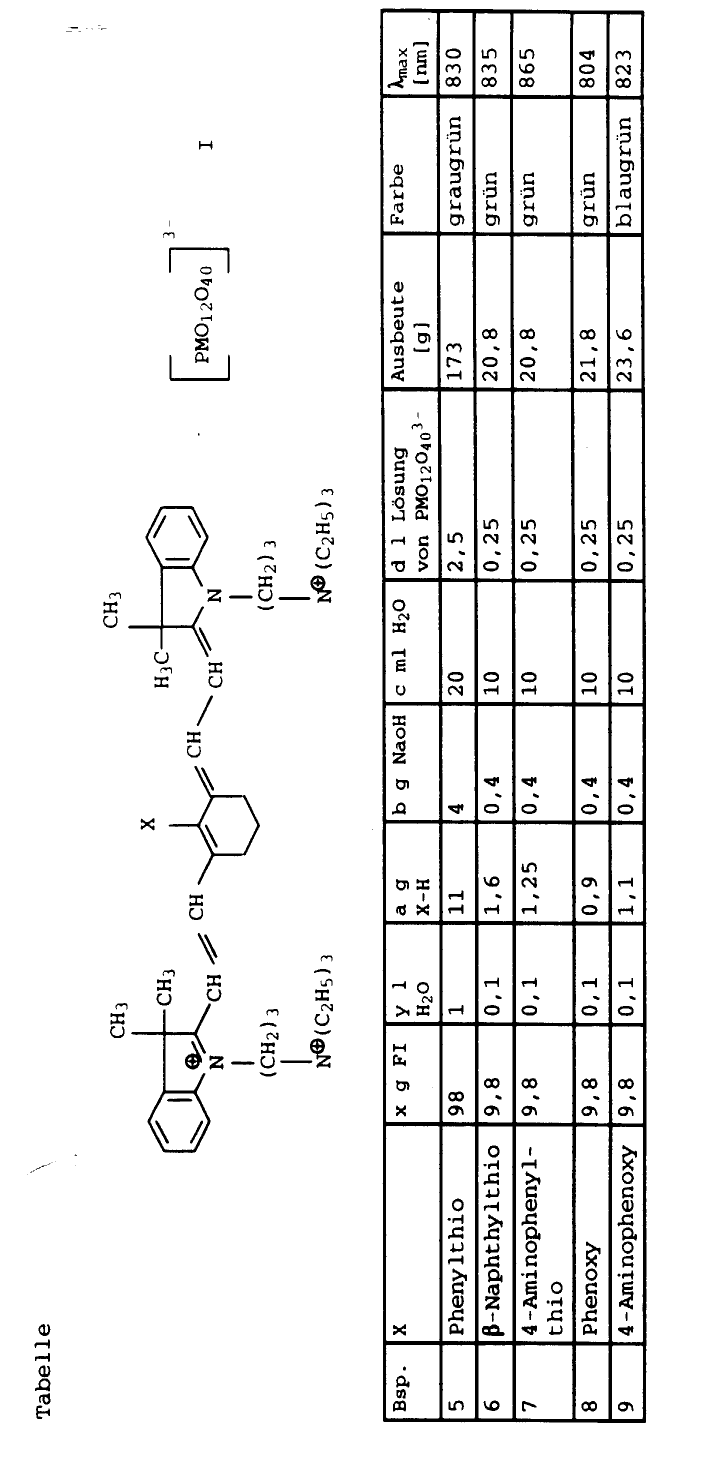

## Patentansprüche

1. Verlackte tris- oder tetrakationische Polymethinfarbstoffe der allgemeinen Formel I 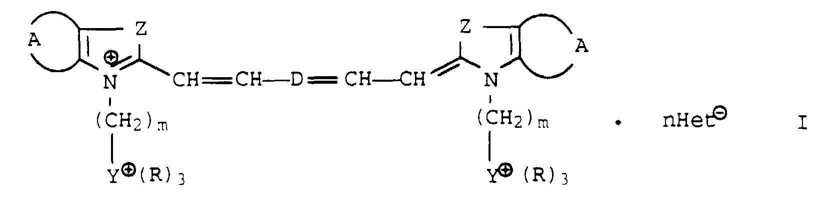 in der die Variablen folgende Bedeutung haben:
A den Rest eines an den Heterocyclus anellierten Benzol- oder Naphthalinkerns, der bis zu drei der folgenden Substituenten tragen kann: C₁-C₁₂-Alkylgruppen, deren C-Kette durch Sauerstoffatome in Etherfunktion unterbrochen sein kann, C₁-C₁₂-Alkoxy, Phenyl, Phenoxy, Phenylthio, Cyano, Amino, Mono-(C₁-C₁₂-alkyl)amino,
Di-(C₁-C₁₂-alkyl)amino, Hydroxy oder Halogen;
Y Stickstoff oder Phosphor;
R gleiche oder verschiedene der folgenden Reste:
C₁-C₁₈-Alkylgruppen, deren C-Kette durch Sauerstoffatome in Etherfunktion unterbrochen sein kann und die bis zu drei der folgenden Substituenten tragen können: Carboxy, C₁-C₄-Alkanoyl, C₁-C₄-Alkoxycarbonyl, C₁-C₄-Alkanoylamino, C₁-C₄-Alkoxycarbonylamino, Acryloyloxy, Methacryloyloxy, Phenyl, Amino, Cyano, Hydroxy oder Halogen; Phenyl- oder C₅-C₇-Cycloalkylgruppen, die jeweils bis zu drei der folgenden Substituenten tragen können:
C₁-C₄-Alkyl, C₁-C₄-Alkoxy oder Halogen;
Z -NR¹-; -O-; -S-; -C(CH₃)₂- oder -CH=CH-,
wobei R¹ einen der definitionsgemäßen Alkyl-, Phenyl- oder C₅-C₇-Cycloalkylreste R bedeutet;
D -CX¹=; -CH=CX¹-CH=; 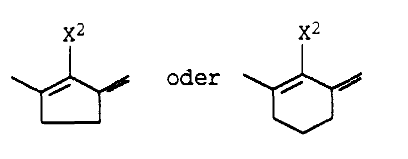
wobei die Variablen folgende Bedeutung haben:
X¹ Wasserstoff, Chlor, Brom oder C₁-C₆-Alkyl;
X² Chlor, Cyano, C₁-C₁₂-Alkoxy oder C₁-C₁₂-Alkylthio; Aryloxy oder Arylthio, die jeweils bis zu fünf der folgenden Substituenten tragen können: Amino, Halogen, Nitro, Cyano, Isocyanato, Isothiocyanato, Hydroxy, Carboxy, Acryloyloxy, Methacryloyloxy,
C₁-C₁₂-Alkyl, C₂-C₁₂-Alkenyl, C₁-C₁₂-Alkoxy,
C₁-C₁₂-Alkanoyl, C₁-C₁₂-Alkanoyloxy, C₁-C₁₂-Alkoxycarbonyl, C₁-C₁₂-Alkoxycarbonyloxy,
Mono-(C₁-C₁₂-alkyl)amino und/oder
Di-(C₁-C₁₂-alkyl)amino, wobei die C-Kette der Alkylreste durch Sauerstoffatome in Etherfunktion unterbrochen sein kann und die Alkylreste der Aminogruppen durch Hydroxy substituiert sein können;
eine Aminogruppe 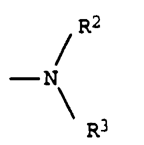 oder Ammoniogruppe 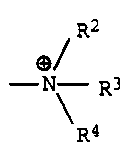 wobei R², R³ und R⁴ unabhängig voneinander C₁-C₁₂-Alkyl, deren C-Kette durch Sauerstoffatome in Etherfunktion unterbrochen sein kann, oder Aryl bedeuten, einer der Reste jeweils auch Wasserstoff bedeuten kann und R² und R³ auch unter Ausbildung eines das Stickstoffatom sowie gegebenenfalls weitere Heteroatome enthaltenden, 5- oder 6-gliedrigen Rings miteinander verbunden sein können;
Het^{⊖} Äquivalent eines Heteropolysäureanions;
m 1 bis 10;
n 3 oder 4.

2. Verlackte triskationische Polymethinfarbstoffe der Formel I nach Anspruch 1, in der die Variablen folgende Bedeutung haben:
A den Rest eines anellierten Benzolrings, der durch Chlor substituiert sein kann;
R C₁-C₄-Alkyl oder Phenyl;
Z -S-; -C(CH₃)₂- oder -CH=CH-;
D -CH=CH-CH= oder 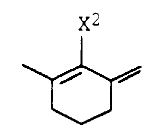 wobei X² Chlor oder Phenoxy oder Phenylthio bedeutet, die jeweils bis zu zwei der folgenden Substituenten tragen können: Amino, Chlor, Brom, Nitro, Cyano, Isocyanato, Isothiocyanato, Hydroxy, Carboxy, Acryloyloxy, Methacryloyloxy, C₁-C₆-Alkyl, C₂-C₆-Alkenyl, C₁-C₆-Alkoxy,
C₁-C₆-Alkanoyl, C₁-C₆-Alkanoyloxy, C₁-C₆-Alkoxycarbonyl, C₁-C₆-Alkoxycarbonyloxy, Mono-(C₁-C₆-alkyl)amino und/oder Di-(C₁-C₆-alkyl)amino, wobei die C-Kette der Alkylreste durch Sauerstoffatome in Etherfunktion unterbrochen sein kann und die Alkylreste der Aminogruppen durch Hydroxy substituiert sein können;
Het^{⊖} Äquivalent eines Heteropolysäureanions auf der Basis von Molybdän, Wolfram und/oder Vanadin;
m 3 bis 6;
n 3.

3. Verlackte Polymethinfarbstoffe der Formel I nach Anspruch 1 oder 2, in der Het^{⊖} das Anion einer Molybdato-, Vanadato-, Wolframatophosphorsäure, Molybdato-, Vanadato-, Wolframatokieselsäure oder einer Mischsäure dieser Säuren ist.

4. Verwendung der verlackten Polymethinfarbstoffe der Formel I gemäß den Ansprüchen 1 bis 3 zur Pigmentierung von Lacken, Druckfarben, Tinten und Kunststoffen.

5. Druckfarben, enthaltend einen oder mehrere der verlackten Polymethinfarbstoffe der Formel I gemäß den Ansprüchen 1 bis 3.

6. Tinten, enthaltend einen oder mehrere der verlackten Polymethinfarbstoffe der Formel I gemäß Anspruch 1.

## Claims

1. Laked triscationic or tetracationic polymethine dyes of the general formula I 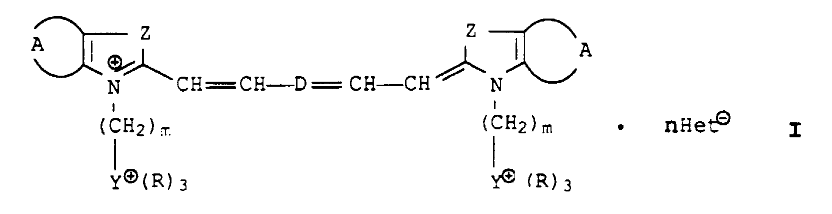 where the variables have the following meanings:
A is the radical of a fused-on benzene or naphthalene nucleus, which may carry up to three of the following substituents: C₁-C₁₂-alkyl groups, whose carbon chain may be interrupted by oxygen atoms in ether function, C₁-C₁₂-alkoxy, phenyl, phenoxy, phenylthio, cyano, amino, mono(C₁-C₁₂-alkyl)amino, di(C₁-C₁₂-alkyl)amino, hydroxyl or halogen,
Y is nitrogen or phosphorus,
R denotes identical or different members of the following set of radicals: C₁-C₁₈-alkyl groups, whose carbon chain may be interrupted by oxygen atoms in ether function and which may carry up to three of the following substituents: carboxyl, C₁-C₄-alkanoyl, C₁-C₄-alkoxycarbonyl, C₁-C₄-alkanoylamino, C₁-C₄-alkoxycarbonylamino, acryloyloxy, methacryloyloxy, phenyl, amino, cyano, hydroxyl or halogen, and phenyl or C₅-C₇-cycloalkyl groups, which may each carry up to three of the following substituents: C₁-C₄-alkyl, C₁-C₄-alkoxy or halogen,
Z is -NR¹-, -O-, -S-, -C(CH₃)₂- or -CH=CH-, where R¹ is an alkyl, phenyl or C₅-C₇-cycloalkyl radical as defined for R,
D is -CX¹=, -CH=CX¹-CH=, 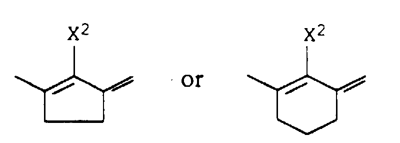 where the variables have the following meanings:
X¹ is hydrogen, chlorine, bromine or C₁-C₆-alkyl,
X² is chlorine, cyano, C₁-C₁₂-alkoxy or C₁-C₁₂-alkylthio, aryloxy or arylthio,which may each carry up to five of the following substituents: amino, halogen, nitro, cyano, isocyanato, isothiocyanato, hydroxyl, carboxyl, acryloyloxy, methacryloyloxy, C₁-C₁₂-alkyl, C₂-C₁₂-alkenyl, C₁-C₁₂-alkoxy, C₁-C₁₂-alkanoyl, C₁-C₁₂-alkanoyloxy, C₁-C₁₂-alkoxycarbonyl, C₁-C₁₂-alkoxycarbonyloxy, mono(C₁-C₁₂-alkyl)amino and/or di(C₁-C₁₂-alkyl)amino, it being possible for the carbon chain of the alkyl radicals to be interrupted by oxygen atoms in ether function and for the alkyl radicals of the amino groups to be substituted by hydroxyl,
an amino group 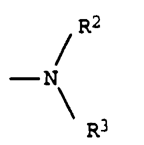 ammonio group 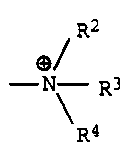 where R², R³ and R⁴ are, independently of one another, C₁-C₁₂-alkyl, whose carbon chain may be interrupted by oxygen atoms in ether function, or aryl, one of the radicals may in each case also be hydrogen and R² and R³ may also combine to form a 5- or 6-membered ring which contains the nitrogen atom and optionally further heteroatoms,
Het^{⊖} is the equivalent of a heteropolyacid anion,
m is from 1 to 10,
n is 3 or 4.

2. Laked triscationic polymethine dyes of the formula I as claimed in claim 1, wherein the variables have the following meanings:
A is the radical of a fused-on benzene ring which may be substituted by chlorine,
R is C₁-C₄-alkyl or phenyl,
Z is -S-, -C(CH₃)₂- or -CH=CH-,
D is -CH=CH-CH= or 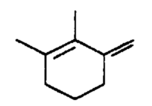
where X² is chlorine or phenoxy or phenylthio, which may each carry up to two of the following substituents: amino, chlorine, bromine, nitro, cyano, isocyanato, isothiocyanato, hydroxyl, carboxyl, acryloyloxy, methacryloyloxy, C₁-C₆-alkyl, C₂-C₆-alkenyl, C₁-C₆-alkoxy, C₁-C₆-alkanoyl, C₁-C₆-alkanoyloxy, C₁-C₆-alkoxycarbonyl, C₁-C₆-alkoxycarbonyloxy, mono(C₁-C₆-alkyl)amino and or di(C₁-C₆-alkyl)amino, it being possible for the carbon chain of the alkyl radicals to be interrupted by oxygen atoms in ether function and for the alkyl radicals of the amino groups to be substituted by hydroxyl,
Het⁻ is the equivalent of a heteropolyacid anion based on molybdenum, tungsten and/or vanadium,
m is from 3 to 6,
n is 3.

3. Laked polymethine dyes of the formula I as claimed in claim 1 or 2, wherein Het^{⊖} is the anion of a molybdo-, vanado- or tungsto-phosphoric acid, of a molybdo-, vanado- or tungsto-silicic acid, or of a mixed acid thereof.

4. The use of the laked polymethine dyes of the formula I claimed in claims 1 to 3 for pigmenting paints, solventborne inks, waterborne inks and plastics.

5. Solventborne inks comprising one or more of the laked polymethine dyes of the formula I claimed in claims 1 to 3.

6. Waterborne inks comprising one or more of the laked polymethine dyes of the formula I claimed in claim 1.

## Revendications

1. Colorants polyméthiniques tris- ou tétracationiques laqués de formule générale 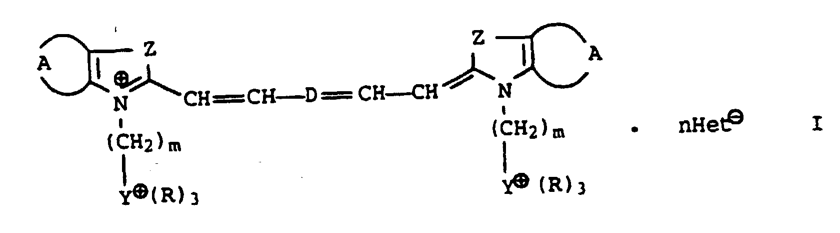 dans laquelle les variables ont les significations suivantes :
A le reste d'un noyau benzène ou naphtalène condensé à un hétérocycle, qui peut porter jusqu'à trois des substituants suivants : groupements alkyle en C₁-C₁₂ dont la chaîne carbonée peut être interrompue par des atomes d'oxygène en fonction éther, alcoxy en C₁-C₁₂, phényle, phénoxy, phénylthio, cyano, amino, monoalkyl(C₁-C₁₂)amino, dialkyl(C₁-C₁₂)amino ou hydroxy ou des atomes d'halogène ;
Y un atome d'azote ou de phosphore ;
R les restes suivants, identiques ou différents :
groupements alkyle en C₁-C₁₈ dont la chaîne carbonée peut être interrompue par des atomes d'oxygène en fonction éther et qui peuvent porter jusqu'à trois des substituants suivants : carboxy, alcanoyle en C₁-C₄, alcoxy(C₁-C₄)carbonyle, alcanoylamino en C₁-C₄, alcoxy(C₁-C₄)carbonylamino, acryloyloxy, méthacryloyloxyphényle, amino, cyano, hydroxy ou halogéno ; groupements phényle ou cycloalkyle en C₅-C₇ qui peuvent chacun porter jusqu'à trois des substituants suivants : alkyle en C₁-C₄, alcoxy en C₁-C₄ ou halogéno ;
Z -NR¹-; -O-; -S-; -C(CH₃)₂- ou -CH=CH-,
R¹ représentant un reste R alkyle, phényle ou cycloalkyle en C₅-C₇ selon la définition donnée;
D -CX¹=; -CH=CX¹-CH=; 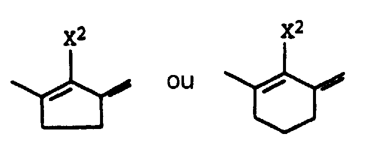 où les variables ont les définitions suivantes :
X¹ atome d'hydrogène, de chlore ou de brome ou groupement alkyle en C₁-C₆ ;
X² atome de chlore ou groupement cyano, alcoxy en C₁-C₁₂ ou alkylthio en C₁-C₁₂ ; aryloxy ou arylthio qui chacun peuvent porter jusqu'à cinq des substituants suivants : amino, halogéno, nitro, cyano, isocyanato, isothiocyanato, hydroxy, carboxy, acryloyloxy, méthacryloyloxy, alkyle en C₁-C₁₂, alcényle en C₂-C₁₂, alcoxy en C₁-C₁₂, alcanoyle en C₁-C₁₂, alcanoyloxy en C₁-C₁₂, alcoxy(C₁-C₁₂)carbonyle, alcoxy(C₁-C₁₂)carbonyloxy, monoalkyl(C₁-C₁₂)amino et/ou dialkyl(C₁-C₁₂)amino, la chaîne carbonée des restes alkyle pouvant être interrompue par des atomes d'oxygène en fonction éther et les restes alkyle des groupements amino pouvant être substitués par des groupements hydroxy ;
groupements amino 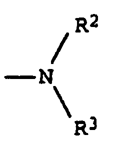 ou ammonio 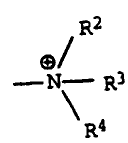 où R², R³ et R⁴, indépendamment les uns des autres représentent des groupements alkyle en C₁-C₁₂ dont la chaîne carbonée peut être interrompue par des atomes d'oxygène en fonction éther, ou aryle, l'un des restes à chaque fois peut aussi représenter un atome d'hydrogène, et R² et R³ peuvent se lier l'un à l'autre avec formation d'un noyau à 5 ou 6 chaînons contenant l'atome d'azote ainsi éventuellement que d'autres hétéroatomes ;
Het^{⊖} équivalent d'un anion d'un hétéropolyacide
m de à 10
n 3 ou 4.

2. Colorants polyméthiniques triscationiques laqués de formule I selon la revendication 1, dans laquelle les variables ont les significations suivantes:
A reste d'un noyau benzène condensé qui peut être substitué par du chlore ;
R alkyle en C₁-C₄ ou phényle ;
Z -S-; -C(CH₃)₂- ou -CH=CH-;
D -CH=CH-CH= ou 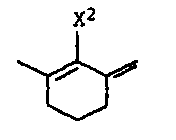
où X² représente un atome de chlore ou un groupement phénoxy ou phénylthio, qui peut à chaque fois porter jusqu'à deux des substituants suivants : amino, chloro, bromo, nitro, cyano, isocyanato, isothiocyanato, hydroxy, carboxy, acryloyloxy, méthacryloyloxy, alkyle en C₁-C₆, alcényle en C₂-C₆, alcoxy en C₁- C₆, alcanoyle en C₁-C₆, alcanoyloxy en C₁-C₆, alcoxy(C₁-C₆)carbonyle, alcoxy(C₁-C₆)carbonyloxy, monoalkyl(C₁-C₆)amine et/ou dialkyl(C₁-C₆)amino, la chaîne carbonée des restes alkyle pouvant être interrompue par des atomes d'oxygène en fonction éther et les restes alkyle des groupements amino pouvant être substitués par des groupements hydroxy ;
Het^{⊖} équivalent d'un anion de polyhétéroacide à base de molybdène, de tungstène et/ou de vanadium ;
m 3à6
n 3.

3. Colorants polyméthiniques laqués de formule I selon la revendication 1, dans laquelle le Het^{⊖} est l'anion d'un acide molybdato-, vanadato-, tungstatophosphorique, molybdato-, vanadato-, tungstatosilicique ou d'un mélange de ces acides.

4. Utilisation des colorants polyméthiniques laqués de formule I selon les revendications 1 à 3, pour la pigmentation de laques, de colorants d'impression, d'encres et de matières plastiques.

5. Colorants d'impression contenant un ou plusieurs des colorants polyméthiniques laqués de formule I selon les revendications 1 à 3.

6. Encres contenant un ou plusieurs des colorants polyméthiniques de formule I selon la revendication 1.
